# EUROPEAN PATENT SPECIFICATION

(11) **EP 4 184 353 B1**
(45) Date of publication and mention of the grant of the patent: **24.04.2024**
(21) Application number: 22207521.0
(22) Date of filing: 15.11.2022
(51) Int. Cl.: G06F 21/10, G06F 21/60, H04L 9/00, G06Q 20/38, G06Q 20/06, G06Q 20/12, H04L 9/08, H04L 9/16

(54) **DIGITAL IMAGING PRODUCTION MANAGEMENT DEVICES AND PROCESSES**
VORRICHTUNGEN UND VERFAHREN ZUR VERWALTUNG DER PRODUKTION VON DIGITALER BILDGEBUNG
DISPOSITIFS ET PROCÉDÉS DE GESTION DE PRODUCTION D'IMAGERIE NUMÉRIQUE

(30) Priority: 17.11.2021 US 202117528458
(43) Date of publication of application: 24.05.2023
(73) Proprietor: Gogigit, LLC, Mt. Pleasant, SC 29464 (US)
(72) Inventor: XU, Ming, Mt. Pleasant, 29464 (US); PATEL, Dimple, Mt. Pleasant, 29464 (US)
(74) Representative: CSY London

(56) References cited:
- GB-A- 2 474 792
- US-A1- 2017 279 783
- US-A1- 2018 094 953

## Description

### BACKGROUND OF THE INVENTION

Digital technology allows mass customization of objects. High volumes of articles may be imaged ("mass"), with each article potentially having a different image ("customization"). Single articles or low volumes of objects may also be economically customized using digital imaging methods.

Mass customization offers advantages over traditional mass production methods. Unlike traditional mass production process, mass customization provides fast changes between different artwork designs, substrates, blank products, printer settings, ink selection, etc. without having to manually change machinery or operational parameters. Due to the ever-faster business cycle, customers prefer to receive finished goods with preferred customized images using the fastest possible methods.

Artists, image designers, and/or graphic work creators produce unique, fashionable and culturally desirable works. Consumers wish to acquire the works, creating opportunities to increase distribution of the works, while providing monetary incentives to artists and producers to publish the works. Currently, there is not a satisfactory way to prevent infringement of intellectual property rights. This is especially true with digital works that are easily copied in the digital age. This fact disincentivizes authors and creators of works of the visual art to publish their works by digital means.

Digital security technologies, such as blockchain technologies with decentralized distributed immutable ledgers, are increasing in application and provide accurate record keeping, information/transaction tracking, and digital theft protection. However, public network blockchain applications are typically complicated to use. These methods require high levels of computational capacity, involve expensive computation/mining fees and blockchain management. Public network blockchain applications are not focused applications and do not protect against impermissible copying or appropriation of digital images devices. Existing blockchain technologies do not provide an incentive for artists and creators to publish their works in digital form.

Technological background for the disclosed solution can also be found in US2018/094953A1, US2017/279783A1 and GB2474792A.

### SUMMARY OF THE PRESENT INVENTION

The invention is set out in the appended set of claims.

The present invention is devices and processes for producing and transacting digitally imaged products. Digital images are stored in a database that is accessible to a central computing device that may be a tangible or virtual central computing devices. The digital images are encrypted with one or more a public keys that are unique to each digital image of the digital images. A purchaser or producer of the product(s)to be imaged selects a digital image from the digital images. A purchaser or producer provides payment information to the central computing device for an imaged substrate or substrates imaged with the digital image selected. An imaged product producer is provided with a private key. The imaged product producer may be selected by the central computing device based upon the imaged product producer's ability to produce the product based upon factors such as the image, the substrate for the image, and the material and/or equipment used to image the product. The imaged product producer decrypts the digital image using a private key assigned to the imaged product producer, and the imaged product producer produces an imaged substrate comprising the selected digital image formed on the substrate. The central computing device allocates payment for the product, including allocating a portion of the payment for the imaged product to a creator of the digital image.

### BRIEF DESCRIPTION OF DRAWINGS

**Figure 1** illustrates an example of an image created by an artist or digital graphic image designer.
**Figure 2** is an illustration showing exemplary elements of a remote computing device including a product image forming device that is a computer-controlled printer and a heat press
**Figure 3** depicts major components of a networked product imaging system.
**Figure 4** is a flow chart showing an example of workflow for a digital imaging production process
**Figure 5** illustrates communications and devices for implementing management and interfacing functions of a digital imaging production process.
**Figure 6** shows an example of a producer's remote digital imaging device communicating through an imaging ledger gateway
**Figure 7** shows a customer or client's computing device communicating with the networked product imaging system.

### DETAILED DESCRIPTION OF PREFERRED EMBODIMENTS

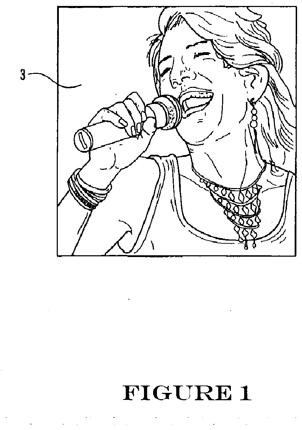

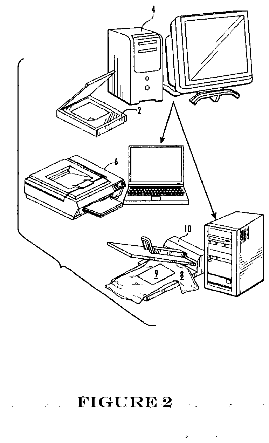

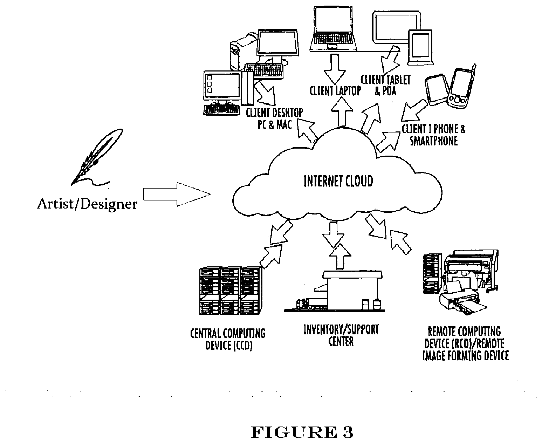

A digital image **(****Figure 1****)** is created by artist or image designer. The digital image is reproducible on substrates by digital devices, such as inkjet printer **(****Figure 2****)**. The imaging process permits customization of various substrates at locations that are remote from a central computer that stores the digital image. **Figure 3** illustrates an example of custom product production comprising an original image provided by an artist or designer. In one embodiment of the present invention, participants in the digital imaging production process are connected to a central computing device, such as by internet/cloud connection. The process is used to produce customized products with original images that have been digitized using cloud based graphic design tools and remote imaging devices.

The present invention provides devices and processes for managing digital imaging production, processes and transactions. In one embodiment, an artist's original image is provided to a central computing device. The original image is in a digital form or is digitized, and is encrypted. A modified version of the digital image is publicly accessible to potential purchasers, such as by displaying a modified version of the digital images on a networked e-commerce platform. The purchaser may review modified versions of multiple digital images on the networked e-commerce platform prior to selecting the digital image from the digital images that is to be produced on a selected substrate to produce the imaged product.

A remote producer of imaged goods receives an order from a customer who desires to purchase a product with the original digital image displayed. The producer orders the image from the central computing device. The central computing device verifies that a number of images allocated for production has not been exceeded, and if not exceeded, provides the image to producer who is provided with a key to decrypt the image. The producer produces the image on a product. The artist is compensated for use of the image.

Security protocols verify that subsequent distribution of the image does not occur on an unauthorized basis. Encryption keys facilitate production of imaged products at remote locations while protecting the digital assets of participants. An image ledger gateway controls encryption keys in connecting selected images to remote imaging devices. The images are accounted for and quality information is monitored by the immutable ledger. Original designs are encrypted and can only be decrypted by authorized entities, such as manufacturers/producers. The digital designs and primary elements thereof are tracked, such as by an immutable distributed ledger, which may be a blockchain ledger bundle in one embodiment. This tracking occurs throughout the ordering and production process, so that only authorized reproduction occurs. Payment flow is recorded and secured.

In one embodiment security protocols are provided at the imaging device used by the producer. For example, a smart print driver or other smart driver of an imaging device validates against data provided to verify a right to print or form the image. The driver validates against the number of authorized allocations of an image to make sure that the authorized number of allocations has not been exceeded. The driver may validate that it has not previously formed the image. The print driver or other driver of an imaging device may validate that it has been authorized to print or form the image, and that it is authorized to print or form the image according to data for certain print specifications. Examples of such specifications include image colors, image size, product substrate and image location on the substrate. Other data that the smart driver may validate is the customer's name, the origin of the order, and payment. Specifications may be provided by an artist, a customer or a producer. Validation feedback is provided from the driver to a point of origin, such as to the CCD.

Quality control information is recorded and secured such as by the use of a ledger bundle to ascertain immutable status and traceability throughout the entire imaging process that involves participants having various roles, including imaging equipment companies, substrate providers, substrate and consumable suppliers, and others. Authorized and authentic materials and consumables with verifiable data is maintained.

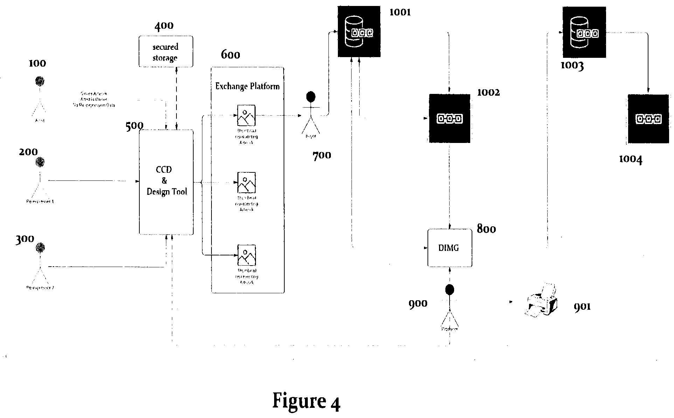

Tuning to the illustrations, an artist or designer **100** creates original artwork, either in digital form or by digitizing the artwork created in another form and sends the original artwork to a secured cloud storage database **400** associated with a central computing device (CCD) **500,** **Figure 4****.** The CCD encrypts the artwork image and in one embodiment creates a set of asymmetric cryptographic key pairs, one public and private. The encryption protected image is presented at an exchange portal **600,** which may be publicly accessible and viewable. The image may be presented as an icon having a low resolution and presenting insufficient visual detail and quality to permit generation of a commercially useful imaged product.

The secured cloud storage database **400** may be employed to store multiple types of objects. The CCD **500** in this embodiment has access to the database **400** that allows it to be used like storage for internet applications, backup and recovery, disaster recovery, data archives, data lakes for analytics, and hybrid could storage. The storage may be divided into units or buckets, and each unit or bucket can be protected by unique and user-defined key(s) for access control. A programmable software development kit (SDK) and application program interface (API) may be available for the CCD **500** and customer/buyer to develop specific access and software access needs. The content of storage units may be downloaded using the HTTP GET interface and the BitTorrent protocol which are known protocols for cloud storage access.

A key management system (KMS) may be installed at cloud storage database **400,** allowing central computing device (CCD) **500** to create, import, rotate, delete, and manage user permissions on cryptographic keys, often asymmetric key pairs, by using a SDK, command-line-interface (CLI) and/or various APIs. Digitally signing operations that use asymmetric key pairs to ensure data privacy and integrity may be included in the control and communication tools at cloud storage database **400.**

Though both vector and bitmap image types may be used, image files of various formats created by the artist or image designer may be loaded to the cloud storage database **400,** including TIFF/TIF, PNG, JPEG/JPG, GIF, and other formats. High quality image file types, such as PNG, with both grayscale and RGB color features, 8-bit color quality or better, and with a transparency option for further modification, are preferred. Lossless compression of images during internet transmission is also desirable. Preferred final (ready-to-print) and fully rendered composite image file types include PNG and PDF.

A customer or an image purchaser/buyer **700** enters the imaging network and obtains a public key, assigned by CCD **500,** allowing access to the image and producing in-network participation information, such as digital ID, digital wallet ID, and payment information. If purchasing of an image occurs, a distributed ledger or blockchain transaction ledgering process is initiated in one embodiment that is based on pre-defined bundle protocol or smart contract/chaincode **1001.** If validation of purchase and payment is confirmed, and a permitted number of copies of the imaged product is confirmed, a producer ID and a countdown number is generated, for example, at a blockchain smart contract or chaincode control **1002.** A private key to decrypt the purchased product design will be assigned and communicated to the assigned producer. The private key is suitable to generate a technology-specific form of the image that can be reproduced on a product. The network digital imaging management gateway (DIMG) **800** communicates with corresponding producer **900** by an authorized digital imaging device **901** to produce the permitted quantity of imaged products. Information throughout the process is bundled with different transactions and permanently written in chain block **1004** through assigned protocols or smart contract/chaincode content **1003.** Producer **900,** upon finishing the product manufacturing, process, communicates with CCD **500** and continue with the next imaging job in the queue.

The network central computing device (CCD) **500** communicates with a plurality of remote product image forming devices **901** through digital imaging management gateway **800.** These devices belong to different producers **900** with technology varieties. For instance, various types of digital inkjet printers, 3D printers, embroidery machines, digital presses, cutter/contour-cutter/kiss-cutters, digital doming machines, engraving machines, and the like are used for imaging products with the original artwork. These imaging devices **901** can be identified, either directly or indirectly with a digital identification number, or serial number. Materials used with these devices such as ink, toner, thread, output energy, and/or blank substrates can be quantified and recorded and communicated with DIMG **800** as permanent blockchain content.

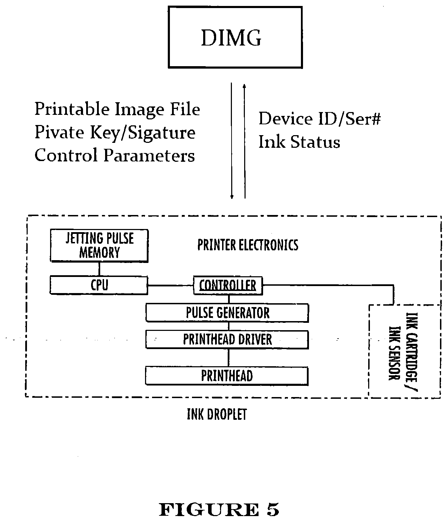

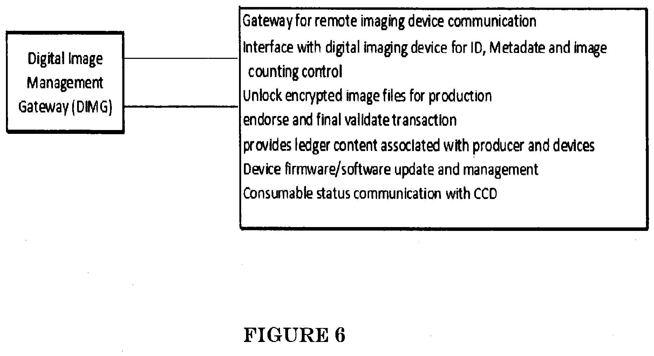

**Figure 5** illustrates an example of data communication between DIMG **800** and an inkjet printer. A printable image file is transmitted from the DIMG to an inkjet printer upon being decrypted with a private key provided by CCD **500** after confirming the transaction and the number of prints. Also transmitted are device parameters and/or instructions to ensure that the correct digital copies are produced with quality materials and by required procedures to achieve required image quality standards. Printer identification and/or serial number information, and inkjet ink status, such as batch number and/or consumption levels, may be transmitted back to DIMG **800** as transaction data stored in the immutable digital ledger or chain blocks. **Figure 6** further defines the functionality of DIMG **800.**

In the embodiment shown in **Figure 6****,** the Digital Imaging Management Gateway (DIMG) **800,** is a computational gateway, or server, and accepts the private key(s) from designated producer to unlock encrypted and blockchain protected imaging files or metadata. This key or keys are authorized and communicated from the central computing device (CCD) **500** to an authorized producer or producers having validated purchase confirmation and/or payment confirmation from a customer or consumer. An authorized number of copies of the image, as assigned and included as content of smart contract or chaincode, is verified according to decrement counting at DIMG **800** that is connected with a producers' **(900)** remoted imaging device(s) that produce the imaged products.

In one optional embodiment, the present invention uses product producers' 900 unique imaging device **901** identifications, or some of them, as the private cryptographic keys instead of generating random number codes. These keys are regulated by the key management system (KMS), stored at cloud storage database **400,** and verified through DIMG **800** for corresponding product producers **900** with designated product manufacturing orders.

Different encryption or hashing methods, algorithms, or techniques may be used to generate cryptographic keys. Techniques such as MD5, SHA-2, and/or CRC32 may be used as long as no `hash collision' occurs. An imaged product producer 900 can access a job order only with matching private cryptographic key(s) embedded in the metadata file(s) before the actual imaged product can be produced by a corresponding device **901.**

In order to connect to and communicate with different constructs of imaging devices **901** at various separate and geographically remote locations, DIMG **800** may include function-specific middleware and/or API so that imaging data/metadata files can be transmitted from DIMG **800** and understood by devices **901.** The middleware and/or API, especially local APIs, ensure information related to production is properly sent from devices **901** and understood by DIMG **800,** and is included in the content of smart contract/chaincode for transaction verification purposes and/or storage at CCD **500**/secured cloud storage database **400.** For example, a printer driver specifically designed for a digital inkjet printer located at DIMG **800** sends printable Printer Command Language (PCL) files to the printer **901** along with control parameters such as ink limiting, color profiles, ink dot gain control lookout tables, etc. for the inkjet printer to execute, while also allowing DIMG **800** to collect information such as the number of hardcopies produced, the ink manufacturer identification, the ink usage level, the ink batch number, and the like. This information represents important quality control information that is available for product quality control, quality assurance and customer support. Including this information as part of the blockchain or ledger content is preferred.

In an embodiment of the present invention, a permitted blockchain system or platform is used for the custom imaging production network. In some embodiments other types of security frameworks having condition-based smart contract or chaincode algorithms may be used. Practical Byzantine Fault Tolerance (PBFT) consensus modified PBFT consensus, Redundant BFT, Q/U, PBFT with Hyperledger framework such as Hyperledger Fabric, Hyperledger Sawtooth, Iroha, Burrow, and Hyperledger Indy protocols or consensus may be adapted for the application of the present invention. Cryptographic tokens are optional for the present invention.

A framework that may be used in the present invention involves establishing permissible quantities of secondary participating peers or nodes for transaction consensus validation and distributed ledger keeping. These nodes may represent artists, producers, sellers, consumable material suppliers, or other network participants having the need or ability to participate in the networked e-commerce platform. Historically high volume transaction participants may have status as high engagement contributors and given higher priority in receiving images or production jobs. This rule is named as Proof-of-Engagement, indicating the basic peer/node selection principle of this invention. For instance, a producer may consume a large amount of imaging consumables within the network and is given a high 'engagement' ranking for producing imaged products and is therefore categorized as a trustworthy blockchain framework peer/node member. Similarly, an artist creates a high volume of images that are selected for production of imaged products, and therefore creates a high volume of network transaction flows, may also be given a high 'engagement' ranking as a participating peer/node.

To prevent or reduce unnecessary consensus computational tasks, and to prevent or reduce peer/node system failures, the security framework of the present invention limits its secondary peer/node, or consensus voting, participation. Preferably, the number of secondary peers/nodes is more than 4 and less than 200, and most preferably between 4 and 50. The list of participants may be renewed/changed from time to time, or upon achieving certain transaction blocks based on revised ranking of high engagement participants.

To further decrease system failures due to computing system latency, local network high traffic occurrences, or mass geographic web communication downtimes, the selection of participating peer or node members may include members from different continents, counties, regions or widely geographically separated areas or jurisdictions. A combination of Domain Name System (DNS) or internet root zones may be selected to form the final consensus forming the blockchain peer/node group.

Central computing device (CCD) **500** is a preferred primary peer or node of the permissioned security framework. It communicates with all other peers or nodes by first broadcasting a transaction request from a customer or client. It also acts as one of the voting peers or nodes to obtain validation of a transaction and a distributed ledger or blockchain creation process. CCD **500** grants or revokes a participants' status as peer/node, and is responsible for maintaining communications, including transaction protocol communications among network participants.

Customer or client **700** or no or low engagement ranking participants, including but not limited to low engagement producers, sellers, blank material providers, may obtain a Simplified Payment Verification (SPV) status, or designated as 'light-clients' of the system. These SPV/light-client participants may be able to only download the header portion of ledger blocks during the initial application installation and network synchronization process. Transactions and access from full nodes can be requested and granted by CCD **500** when needed. This arrangement decreases unnecessary data flow at the bundled network and provides increased security and confidentiality for other participants.

Commercially distributed ledgers such as provided by commercial blockchain services may be integrated into present invention in place of CCD 500 in an independently hosted blockchain framework. Blockchain-as-a-Service (BaaS), Blockchain Technology-as-a-Service (BTaaS) of different kinds can be linked to central computing device (CCD) **500** and perform the previously defined functions, transaction control and validation, information gathering and recording, together with other functions that the CCD **500** performs.

Transaction and/or payment methods that may be used in the present invention may include traditional or conventional methods including credit cards, electric wire transfers, such as the Society for Worldwide Interbank Financial Telecommunications (SWIFT), in-chain cryptographic tokens, or other methods acceptable to participants. Transactions can be tracked and recorded by the blockchain system for validation and historic analysis purposes. Transactions with external blockchain ecosystems may be developed using cross-chain technologies by using similar transaction payment methods. For instance, FabToken, a cryptocurrency management system, may be adapted for both in-chain and cross-chain transaction payment purposes if, for example, the Hyperledger Fabric v2.0 ecosystem is used in the current invention. Another example is COSMOS cross-chain tools used for inter-blockchain communication protocols and transfer of tokenized payments with external blockchain systems.

The present invention, in yet another embodiment, provides cloud or web-based user interface (Ul) and graphic design tools for buyers/customers to modify or customize artwork images downloaded from cloud storage after decryption using local computing devices, such as laptop computers or smart mobile devices. For example, a combination of the image with other designs may provide a more personalized customer product. Uploaded photographs, added images and/or text information can be added to the original image using graphic design tools before the final image is sent to an imaging production device via DIMG **800.** Variable data customization image production with multiple images having different text information, such as name or identity, can be spooled, queued, and finally produced by the imaging device. In-cloud temporary storage, either at or through central computing device (CCD **500**), may be provided during the graphic modification or supplementation process.

The graphic design tool set of the present invention, through the use of web or cloud-based user interfaces, allows a buyer to modify purchased digital designs by adding customized or personalized features and/or effects to the purchased digital designs. An image design template with multiple-layer structure feature permits the purchased artwork to be used as either background, forefront, middle layer insert, or even artistically masked with other image layer(s) with various opacities or transparencies. The purchased artwork or artworks may be locked as an independent layer which cannot be changed, distorted, or modified in shape, color, ratio, and may not even to covered for portion(s) with copyright identified and claimed areas or features.

In one embodiment, the creator of the digital image defines a layer or a plurality of layers of the digital image as proprietary to the creator. Each layer of the layer of the plurality of layers that is defined as proprietary to the creator may be separately encrypted with a public key that is unique to the layer. The central computing device will allocate a portion of the payment for the imaged substrate that comprises a layer or plurality of layers defined as proprietary. Depending on the imaging technology, substrate properties, substrate dimensions and shape, and final product properties, the design template or templates may automatically resize the purchased artwork before overlaying or superimposing the artwork with other customized design features. This capability ensures that the purchased artwork is shown in its entirety on the final imaged product, but with dimensions, shape, and contours suitable to the selected substrate. Graphic design creation, modification and/or manipulation techniques may also be used. For example, cropping, filtering, shaped and/or geometrically shaped masking, image-in-text, and/or opacity changes can be included in the design template for better visual and text message effects. A final composite image can then be generated and sent to the imaged product producer as part of the production order specifications.

An original design may be sequentially modified by subsequent users if permitted by prior users or artists. Users who provide modifications along the chain may be awarded a portion of the sales price if their modification is used by a subsequent user.

Artists may wish to limit the number of copies of their work that may be produced. The network imaging ecosystem of the present invention provides the ability to limit and control the number of copies of imaged products buyers/customers **700** are able to purchase. **Figure 4****.** When a purchase is made, a defined number of copies of imaged products decorated with the decrypted artwork image is locked and bundled with the distributed ledger or blockchain ledger through smart contract or chaincode. The Digital imaging Management Gate (DIMG) **800** executes a decrement process, reducing the count of available images each time a single imaging data file is sent to remote imaging device **901.** DIMG **800** further determines the number of imaging allocations remaining for the selected and purchased digital image. Only when a non-zero count for the remaining image allocations for the purchased digital image is available will DIMG **800** transmit the requested image file from CCD **500** to allow production of product imaged with the purchased image.

Different substrate materials may be used with the present invention. This allows products formed of different materials to be imaged according to the invention. Examples may include textile, metal, wood, ceramic, polymer, plastic or resinous materials, glass, etc. Depending on the imaging method or technology, direct or indirect imaging forming methods may be used. Extra steps may need to be taken for indirect imaging methods. Instructions for operations may be included in the metadata file provided by DIMG **800** to the remote producer **900** and/or devices **901.**

The image infringement/theft prevention processes described herein may be used in conjunction with graphic re-work tools and immutable ledger/distributed or blockchain networks. The invention reduces unauthorized copying, download, screenshot, hot-linked representation, illegal web-scraping and the like, further protecting the interests of both the artist/designer and consumer. For instance, embedding a plug-in program of WordPress' Copy Content Protection may disable certain mouse and keyboard commands, thereby preventing local printing, or captioning of either an on-screen image and/or text information.

The invention allows buyers, clients, customers, sellers, substrate suppliers, and other imaging network participants **200** to endorse artists and designers and their images and artwork. For instance, after a buyer purchases certain artwork and likes the design, he or she may post his/her endorsement through 're-expression,' which will increase the corresponding artist or image designer's work rating. **(****Figure 4****)** The higher the 're-expression' count, the higher the transaction rate of certain artwork may be reflected. Other non-transaction participants **300** may also be involved in 're-expression' endorsement. Artists or image designers who receive high 're-expression' endorsement may be elevated to high Proof-of-Engagement status.

An original design can be sequentially modified, or "re-expressed", by subsequent users if permitted by prior users. Users who provide modifications along the chain may be awarded a portion of the sales price if their modification is used by a subsequent user.

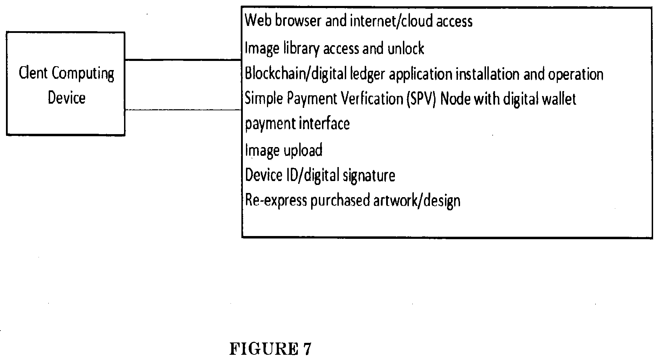

**Figure 7** depicts basic software functions and computational capabilities of buyer or client computation devices. Such requirements ensure improved access and use of the network for imaged product purchase, decryption, image uploading, graphic design interfacing, payment, and re-expression endorsing exercises. Operating systems that may be used include Microsoft, Linux, or Apple OS X, Android, Apple IOS.

A buyer or client **700** of the secured imaging network of the present invention may tender his or her payment following the blockchain protocol to CCD **500** for the purchase of both the artwork/design and the cost of the imaged product. Payment to imaged product producer **900** and artist **100** is transferred, such as from CCD **500,** according to the blockchain protocol. Transactions are sequenced and recorded in the chain blocks with time stamps.

In another embodiment of the invention for producing digitally imaged products, the plurality of digital images is stored in a database and encrypted with a public key that is unique to each digital image as described above. A selected digital image from the plurality of digital images is decrypted by a private key assigned to an imaged product producer. A driver of an imaging device controlled by the imaged product producer validates data associated with the selected digital image, and upon validation of data associated with the selected digital image, the imaging device images the imaged substrate with the selected digital image to produce the imaged substrate. The driver of the imaging device controls allocation of the payment for the imaged substrate imaged with the selected digital image, including allocation of the payment to one or more creators of the selected digital image.

The imaged product producer may control multiple imaging devices with a single private key that is assigned to the image product producer. This permits the imaged product producer to assign an imaging job to any one of multiple imaging devices, rather than being limited to assignment of the imaging job to a specific imaging device associated with one specific private key.

## Claims

1. A process for producing digitally imaged products, comprising the steps of:
storing a plurality digital images in a database accessible to a central computing device;
encrypting each of the digital images with a public key that is unique to each digital image of the plurality of digital images;
selecting a digital image from the plurality of digital images;
providing payment information to the central computing device for an imaged substrate imaged with the selected digital image;
providing an imaged product producer with a private key;
the central computing device selecting the imaged product producer to produce an imaged product imaged with the selected digital image;
the imaged product producer decrypting the image using a private key assigned to the imaged product producer;
producing the imaged substrate comprising the selected digital image formed on the substrate; and
the central computing device allocating a portion of the payment for the imaged substrate imaged with the selected digital image to a creator of the digital image.

2. The process for producing digitally imaged products as described in Claim 1, comprising the additional steps of displaying a modified version of the plurality of digital images on a private network; and
reviewing the modified version of the digital images on the private network prior to selecting the digital image from the digital images.

3. The process for producing digitally imaged products as described in Claim 1, comprising the additional steps of determining the number of imaging allocations remaining for the selected digital image; and
forming the selected digital image on the substrate if the number of imaging allocations remaining for the selected digital image is greater than zero.

4. The process for producing digitally imaged products as described in Claim 1, wherein the digital images are original unpublished images when first stored on the database that is accessible to the central computing device.

5. The process for producing digitally imaged products as described in Claim 1, wherein purchasing the selected digital image comprises the additional steps of providing an identification of a purchaser of the imaged substrate to the central computing device and providing a payment method to the central computing device.

6. The process for producing digitally imaged products as described in Claim 1, comprising the additional steps of the central computing device encrypting information comprising an identification of a purchaser of the imaged substrate and the purchaser providing a payment method to the central computing device.

7. The process for producing digitally imaged products as described in Claim 1, further comprising the step of the imaged product producer deleting selected digital image data after the step of producing an imaged substrate comprising the selected digital image formed on the substrate.

8. The process for producing digitally imaged products as described in Claim 1, further comprising the step of the central computing device selecting the imaged product producer from a plurality of geographically remote imaged product producers.

9. The process for producing digitally imaged products as described in Claim 1, wherein each of the digital images comprises a plurality of layers, and wherein each layer of the plurality of layers is encrypted with a public key that is unique to each layer of the plurality of layers.

10. The process for producing digitally imaged products as described in Claim 1, further comprising the step of the creator of the digital image defining a layer of a plurality of layers of the digital image as proprietary to the creator, and separately encrypting the layer of the plurality of layers that is defined as proprietary to the creator with a public key that is unique to the layer of the plurality of layers that is defined as propriety to the creator of the digital image.

11. The process for producing digitally imaged products as described in Claim 1, further comprising the step of the creator of the digital image defining a layer of a plurality of layers of the digital image as proprietary to the creator, and separately encrypting the layer of the plurality of layers that is defined as proprietary to the creator with a public key that is unique to the layer of the plurality of layers that is defined as propriety to the creator of the digital image, and the central computing device allocating a portion of the payment for the imaged substrate that comprises the layer of the plurality of layers that is defined as proprietary to the creator of the digital image to the creator of the digital image.

12. A process for producing digitally imaged products, comprising the steps of:
storing a plurality of digital images in a database;
encrypting each of the digital images with a public key that is unique to each digital image of the plurality of digital images;
selecting a digital image from the plurality of digital images;
providing payment information for an imaged substrate imaged with the selected digital image;
decrypting the selected digital image using a private key assigned to an imaged product producer;
a driver of an imaging device controlled by the imaged product producer validating data associated with the selected digital image; upon validation of data associated with the selected digital image by the driver of the imaging device, imaging the imaged substrate with the selected digital image to produce the imaged substrate; and
allocating a portion of the payment for the imaged substrate imaged with the selected digital image to a creator of the selected digital image.

13. The process for producing digitally imaged products as described in Claim 12, comprising the additional steps of the driver of the imaging device validating the number of imaging allocations remaining for the selected digital image; and the imaging device forming the selected digital image on the substrate if the number of imaging allocations remaining for the selected digital image is greater than zero.

14. The process for producing digitally imaged products as described in Claim 12, wherein an imaged product producer controls multiple imaging devices with a single private key that is assigned to the image product producer.

15. The process for producing digitally imaged products as described in Claim 12, wherein the driver of the imaging device controls allocation of the payment for the imaged substrate.

## Patentansprüche

1. Verfahren zur Herstellung von digital bebilderten Produkten, das die folgenden Schritte beinhaltet:
Speichern mehrerer digitaler Bilder in einer Datenbank, auf die ein zentrales Rechengerät zugreifen kann;
Verschlüsseln jedes der digitalen Bilder mit einem öffentlichen Schlüssel, der für jedes digitale Bild der mehreren digitalen Bilder eindeutig ist;
Auswählen eines digitalen Bildes aus den mehreren digitalen Bildern;
Versorgen des zentralen Rechengeräts mit Zahlungsinformationen für ein bebildertes Substrat, das mit dem ausgewählten digitalen Bild bebildert ist;
Versorgen eines Herstellers eines bebilderten Produkts mit einem privaten Schlüssel;
wobei das zentrale Rechengerät den Hersteller des bebilderten Produkts zum Herstellen eines bebilderten Produkts, das mit dem ausgewählten digitalen Bild bebildert ist, auswählt;
wobei der Hersteller des bebilderten Produkts das Bild mit einem dem Hersteller des bebilderten Produkts zugewiesenen privaten Schlüssels entschlüsselt;
Herstellen des bebilderten Substrats, das das auf dem Substrat gebildete ausgewählte digitale Bild umfasst; und
wobei das zentrale Rechengerät einen Teil der Zahlung für das bebilderte Substrat, das mit dem ausgewählten digitalen Bild bebildert ist, einem Erzeuger des digitalen Bildes zuweist.

2. Verfahren zur Herstellung von digital bebilderten Produkten nach Anspruch 1, das die folgenden zusätzlichen Schritte beinhaltet:
Anzeigen einer modifizierten Version der mehreren digitalen Bilder in einem privaten Netzwerk; und
Überprüfen der modifizierten Version der digitalen Bilder in dem privaten Netzwerk vor der Auswahl des digitalen Bildes aus den digitalen Bildern.

3. Verfahren zur Herstellung von digital bebilderten Produkten nach Anspruch 1, das die folgenden zusätzlichen Schritte beinhaltet:
Bestimmen der Anzahl von für das ausgewählte digitale Bild verbleibenden Bebilderungszuweisungen; und
Ausbilden des ausgewählten digitalen Bildes auf dem Substrat, wenn die Anzahl von für das ausgewählte digitale Bild verbleibenden Bebilderungszuweisungen größer als Null ist.

4. Verfahren zur Herstellung von digital bebilderten Produkten nach Anspruch 1, wobei die digitalen Bilder unveröffentlichte Originalbilder sind, wenn sie zum ersten Mal in der Datenbank gespeichert werden, auf die das zentrale Rechengerät zugreifen kann.

5. Verfahren zur Herstellung von digital bebilderten Produkten nach Anspruch 1, wobei das Kaufen des ausgewählten digitalen Bildes die zusätzlichen Schritte des Versorgens des zentralen Rechengeräts mit einer Identifikation eines Käufers des bebilderten Substrats und des Versorgens des zentralen Rechengeräts mit einer Zahlungsmethode beinhaltet.

6. Verfahren zur Herstellung von digital bebilderten Produkten nach Anspruch 1, das die zusätzlichen Schritte des Verschlüsselns, durch das zentrale Rechengerät, von eine Identifikation eines Käufers des bebilderten Substrats umfassenden Informationen und des Versorgens, durch den Käufer, der zentralen Rechenvorrichtung mit einer Zahlungsmethode beinhaltet.

7. Verfahren zur Herstellung von digital bebilderten Produkten nach Anspruch 1, das ferner den Schritt des Löschens, durch den Hersteller des bebilderten Produkts, ausgewählter digitaler Bilddaten nach dem Schritt des Herstellens eines bebilderten Substrats beinhaltet, das das auf dem Substrat gebildete ausgewählte digitale Bild umfasst.

8. Verfahren zur Herstellung von digital bebilderten Produkten nach Anspruch 1, das ferner den Schritt beinhaltet, dass das zentrale Rechengerät den Hersteller des bebilderten Produkts aus mehreren geographisch entfernten Herstellern von bebilderten Produkten auswählt.

9. Verfahren zur Herstellung von digital bebilderten Produkten nach Anspruch 1, wobei jedes der digitalen Bilder mehrere Schichten umfasst und wobei jede Schicht der mehreren Schichten mit einem öffentlichen Schlüssel verschlüsselt ist, der für jede Schicht der mehreren Schichten eindeutig ist.

10. Verfahren zur Herstellung von digital bebilderten Produkten nach Anspruch 1, das ferner den Schritt des Definierens, durch den Erzeuger des digitalen Bildes, einer Schicht von mehreren Schichten des digitalen Bildes als für den Erzeuger urheberrechtlich geschützt, und das separate Verschlüsseln der als für den Erzeuger urheberrechtlich geschützt definierten Schicht der mehreren Schichten mit einem öffentlichen Schlüssel beinhaltet, der für die als für den Erzeuger des digitalen Bildes als urheberrechtlich geschützt definierte Schicht der mehreren Schichten eindeutig ist.

11. Verfahren zur Herstellung von digital bebilderten Produkten nach Anspruch 1, das ferner den Schritt des Definierens, durch den Erzeuger des digitalen Bildes, einer Schicht von mehreren Schichten des digitalen Bildes als für den Erzeuger urheberrechtlich geschützt, und das separate Verschlüsseln der als für den Erzeuger urheberrechtlich geschützt definierten Schicht der mehreren Schichten mit einem öffentlichen Schlüssel, der für die als für den Erzeuger des digitalen Bildes urheberrechtlich geschützt definierte Schicht der mehreren Schichten eindeutig ist, und das Zuweisen, durch das zentrale Rechengerät, eines Teils der Zahlung für das bebilderte Substrat, das die als für den Erzeuger des digitalen Bildes urheberrechtlich geschützt definierte Schicht der mehreren Schichten umfasst, dem Erzeuger des digitalen Bildes beinhaltet.

12. Verfahren zur Herstellung von digital bebilderten Produkten, das die folgenden Schritte beinhaltet:
Speichern mehrerer digitaler Bilder in einer Datenbank;
Verschlüsseln jedes der digitalen Bilder mit einem öffentlichen Schlüssel, der für jedes digitale Bild der mehreren digitalen Bilder eindeutig ist;
Auswählen eines digitalen Bildes aus den mehreren digitalen Bildern;
Bereitstellen von Zahlungsinformationen für ein bebildertes Substrat, das mit dem ausgewählten digitalen Bild bebildert ist;
Entschlüsseln des ausgewählten digitalen Bildes mit einem privaten Schlüssel, der einem Hersteller des bebilderten Produkts zugewiesen ist;
Validieren, durch einen Treiber eines vom Hersteller des bebilderten Produkts gesteuerten Bebilderungsgeräts, von mit dem ausgewählten digitalen Bild assoziierten Daten; Bebildern, nach der Validierung von mit dem ausgewählten digitalen Bild durch den Treiber des Bebilderungsgeräts assoziierten Daten, des bebilderten Substrats mit dem ausgewählten digitalen Bild, um das bebilderte Substrat zu erzeugen; und
Zuweisen eines Teils der Zahlung für das bebilderte Subsgtrat, das mit dem ausgewählten digitalen Bild bebildert ist, einem Erzeuger des ausgewählten digitalen Bildes.

13. Verfahren zur Herstellung von digital bebilderten Produkten nach Anspruch 12, das die zusätzlichen Schritte des Validierens, durch den Treiber des Bebilderungsgeräts, der Anzahl von für das ausgewählte digitale Bild verbleibenden Bebilderungszuweisungen beinhaltet; und Bilden, durch das Bebilderungsgerät, des ausgewählten digitalen Bildes auf dem Substrat, wenn die Anzahl von für das ausgewählte digitale Bild verbleibenden Bebilderungszuweisungen größer als Null ist.

14. Verfahren zur Herstellung von digital bebilderten Produkten nach Anspruch 12, wobei ein Hersteller des bebilderten Produkts mehrere Bebilderungsgeräte mit einem einzigen privaten Schlüssel steuert, der dem Bildprodukthersteller zugewiesen ist.

15. Verfahren zur Herstellung von digital bebilderten Produkten nach Anspruch 12, wobei der Treiber des Bildgebungsgeräts die Zuweisung der Zahlung für das bebilderte Substrat steuert.

## Revendications

1. Un procédé de production de produits imagés numériquement, comprenant les opérations suivantes :
la conservation en mémoire d'une pluralité d'images numériques dans une base de données accessible à un dispositif informatique central,
le chiffrement de chacune des images numériques avec une clé publique qui est unique à chaque image numérique de la pluralité d'images numériques,
la sélection d'une image numérique à partir de la pluralité d'images numériques,
la fourniture d'informations de paiement au dispositif informatique central pour un substrat imagé qui est imagé avec l'image numérique sélectionnée,
la fourniture d'un producteur de produits imagés avec une clé privée,
la sélection par le dispositif informatique central du producteur de produits imagés de façon à produire un produit imagé qui est imagé avec l'image numérique sélectionnée,
le déchiffrement par le producteur de produits imagés de l'image au moyen d'une clé privée affectée au producteur de produits imagés,
la production du substrat imagé comprenant l'image numérique sélectionnée formée sur le substrat, et
l'attribution par le dispositif informatique central d'une partie du paiement pour le substrat imagé qui est imagé avec l'image numérique sélectionnée à un créateur de l'image numérique.

2. Le procédé de production de produits imagés numériquement selon la Revendication 1, comprenant les opérations additionnelles suivantes :
l'affichage d'une version modifiée de la pluralité d'images numériques sur un réseau privé, et
l'examen de la version modifiée des images numériques sur le réseau privé avant la sélection de l'image numérique à partir des images numériques.

3. Le procédé de production de produits imagés numériquement selon la Revendication 1, comprenant les opérations additionnelles suivantes : la détermination du nombre d'attributions d'imagerie restantes pour l'image numérique sélectionnée, et
la formation de l'image numérique sélectionnée sur le substrat si le nombre d'attributions d'imagerie restantes pour l'image numérique sélectionnée est supérieur à zéro.

4. Le procédé de production de produits imagés numériquement selon la Revendication 1, où les images numériques sont des images non publiées originales lorsqu'elle sont stockées pour la première fois sur la base de données qui est accessible au dispositif informatique central.

5. Le procédé de production de produits imagés numériquement selon la Revendication 1, où l'achat de l'image numérique sélectionnée comprend les opérations additionnelles suivantes : la fourniture d'une identification d'un acheteur du substrat imagé au dispositif informatique central et la fourniture d'un procédé de paiement au dispositif informatique central.

6. Le procédé de production de produits imagés numériquement selon la Revendication 1, comprenant les opérations additionnelles suivantes : le chiffrement par le dispositif informatique central d'informations comprenant une identification d'un acheteur du substrat imagé et la fourniture par l'acheteur d'un procédé de paiement au dispositif informatique central.

7. Le procédé de production de produits imagés numériquement selon la Revendication 1, comprenant en outre l'opération de suppression par le producteur de produits imagés de données d'images numériques sélectionnées après l'opération de production d'un substrat imagé comprenant l'image numérique sélectionnée formée sur le substrat.

8. Le procédé de production de produits imagés numériquement selon la Revendication 1, comprenant en outre l'opération de sélection par le dispositif informatique central du producteur de produits imagés à partir d'une pluralité de producteurs de produits imagés géographiquement distants.

9. Le procédé de production de produits imagés numériquement selon la Revendication 1, où chacune des images numériques comprend une pluralité de couches, et où chaque couche de la pluralité de couches est chiffrée avec une clé publique qui est unique à chaque couche de la pluralité de couches.

10. Le procédé de production de produits imagés numériquement selon la Revendication 1, comprenant en outre l'opération de définition par le créateur de l'image numérique d'une couche d'une pluralité de couches de l'image numérique comme étant propriétaire au créateur, et le chiffrement séparé de la couche de la pluralité de couches qui est définie comme étant propriétaire au créateur avec une clé publique qui est unique à la couche de la pluralité de couches qui est définie comme étant propriétaire au créateur de l'image numérique.

11. Le procédé de production de produits imagés numériquement selon la Revendication 1, comprenant en outre l'opération de définition par le créateur de l'image numérique d'une couche d'une pluralité de couches de l'image numérique comme étant propriétaire au créateur, et le chiffrement séparé de la couche de la pluralité de couches qui est définie comme étant propriétaire au créateur avec une clé publique qui est unique à la couche de la pluralité de couches qui est définie comme étant propriétaire au créateur de l'image numérique, et l'attribution par le dispositif informatique central d'une partie du paiement pour le substrat imagé qui comprend la couche de la pluralité de couches qui est définie comme étant propriétaire au créateur de l'image numérique au créateur de l'image numérique.

12. Un procédé de production de produits imagés numériquement, comprenant les opérations suivantes :
la conservation en mémoire d'une pluralité d'images numériques dans une base de données,
le chiffrement de chacune des images numériques avec une clé publique qui est unique à chaque image numérique de la pluralité d'images numériques,
la sélection d'une image numérique à partir de la pluralité d'images numériques,
la fourniture d'informations de paiement pour un substrat imagé qui est imagé avec l'image numérique sélectionnée,
le déchiffrement de l'image numérique sélectionnée au moyen d'une clé privée affectée à un producteur de produits imagés,
un pilote d'un dispositif d'imagerie commandé par le producteur de produits imagés pour la validation de données associées à l'image numérique sélectionnée, après la validation de données associées à l'image numérique sélectionnée par le pilote du dispositif d'imagerie, l'imagerie du substrat imagé avec l'image numérique sélectionnée de façon à produire le substrat imagé, et l'attribution d'une partie du paiement pour le substrat imagé qui est imagé avec l'image numérique sélectionnée à un créateur de l'image numérique sélectionnée.

13. Le procédé de production de produits imagés numériquement selon la Revendication 12, comprenant les opérations additionnelles suivantes : la validation par le pilote du dispositif d'imagerie du nombre d'attributions d'imagerie restantes pour l'image numérique sélectionnée, et la formation par le dispositif d'imagerie de l'image numérique sélectionnée sur le substrat si le nombre d'attributions d'imagerie restantes pour l'image numérique sélectionnée est supérieur à zéro.

14. Le procédé de production de produits imagés numériquement selon la Revendication 12, où un producteur de produits imagés commande une pluralité de dispositifs d'imagerie avec une clé privée unique qui est affectée au producteur de produits imagés.

15. Le procédé de production de produits imagés numériquement selon la Revendication 12, où le pilote du dispositif d'imagerie commande l'attribution du paiement pour le substrat imagé.
